# EUROPEAN PATENT APPLICATION

(11) **EP 4 266 411 A1**
(43) Date of publication of application: **25.10.2023**
(21) Application number: 21911496.4
(22) Date of filing: 21.12.2021
(51) Int. Cl.: H01M 4/36, H01M 4/38, H01M 4/587, H01M 4/62, H01M 10/052

(54) **NEGATIVE ELECTRODE ACTIVE MATERIAL FOR LITHIUM SECONDARY BATTERY, METHOD FOR PREPARING SAME, AND LITHIUM SECONDARY BATTERY COMPRISING SAME**

(30) Priority: 21.12.2020 KR 20200179454
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: YOU, Seung Jae, Pohang-si, Gyeongsangbuk-do 37655 (KR); PARK, Sun Jong, Pohang-si, Gyeongsangbuk-do 37655 (KR); KANG, Eun-Tae, Pohang-si, Gyeongsangbuk-do 37681 (KR); KIM, Yong Jung, Pohang-si, Gyeongsangbuk-do 37673 (KR); WOO, Jung Gyu, Pohang-si, Gyeongsangbuk-do 37671 (KR); CHO, Moonkyu, Pohang-si, Gyeongsangbuk-do 37671 (KR); PARK, Sangeun, Hanam-si, Gyeonggi-do 12907 (KR)
(74) Representative: Potter Clarkson
(86) International application number: PCT/KR2021/019547
(87) International publication number: WO 2022/139429

(57) **Abstract**

The present embodiments relate to a negative electrode active material for a lithium secondary battery, a method for preparing the same, and a lithium secondary battery comprising the same.

The negative electrode active material for a lithium secondary battery, according to one embodiment, comprises a silicon-carbon composite comprising silicon nanoparticles and a carbon matrix, and can have a degree of oxidation that is less than or equal to 10.5%.

## Description

### [Technical Field]

The present exemplary embodiments relate to a negative electrode active material for a lithium secondary battery, a method for preparing the same, and a lithium secondary battery comprising the same.

### [Background Art]

Lithium ion batteries are secondary battery systems currently most widely used in mobile electronic communication devices, electric vehicles, and energy storage devices. Such lithium ion batteries have attracted attention due to advantages such as a high energy density and operating voltage and a relatively small self-discharge rate as compared with commercial aqueous secondary batteries (Ni-Cd, Ni-MH, etc.). However, when considering a more efficient use time in mobile devices improvement of energy characteristics in electric vehicles, and the like, improvement in electrochemical characteristics still remains as technical problems to be solved. For this reason, a lot of research and development has been currently conducted over four raw materials such as a positive electrode, a negative electrode, an electrolyte, and a separator.

A graphite-based material exhibiting excellent capacity retention characteristics and efficiency has been commercially available for the negative electrode among these raw materials. However, a relatively low theoretical capacity value (LiC6: 372 mAh/g) and a low discharge capacity ratio of the graphite-based material are somewhat insufficient to meet high energy and high power density characteristics of batteries required by the market. Accordingly, many researchers have been interested in group IV elements (Si, Ge, and Sn) on the periodic table. Among the group IV elements, Si has attracted attention as a very attractive material due to a very high theoretical capacity (Li15Si4: 3600 mAh/g) and low operating voltage (~0.1V vs. Li/Li+) characteristics.

However, a general silicon-based negative electrode material is accompanied by a volume change up to 300% during a cycle, and causes particle cracking and loses electrical contact due to continuous charging and discharging to exhibit low discharge capacity ratio characteristics. Therefore, it is difficult to apply the general silicon-based negative electrode material to an actual battery.

Accordingly, the development of a negative electrode active material having characteristics capable of improving electrochemical performance of a battery in spite of using the silicon-based negative electrode material has been demanded.

### [Disclosure]

### [Technical Problem]

The present exemplary embodiment attempts to provide a negative electrode active material for a lithium secondary battery, a method for preparing the same, and a lithium secondary battery comprising the same capable of having excellent electrochemical performance.

### [Technical Solution]

A negative electrode active material for a lithium secondary battery according to an exemplary embodiment may include a silicon-carbon composite including silicon nanoparticles and a carbon matrix, wherein an oxidation degree of the negative electrode active material is 10.5% or less.

More specifically, the oxidation degree of the negative electrode active material may be in the range of 6% to 9%.

The negative electrode active material for a lithium secondary battery may further include an amorphous carbon coating layer positioned on a surface of the silicon-carbon composite.

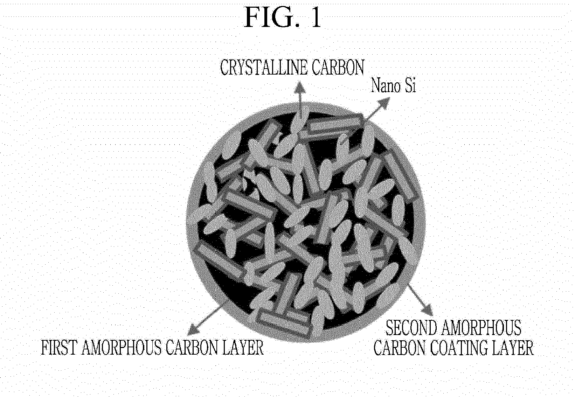

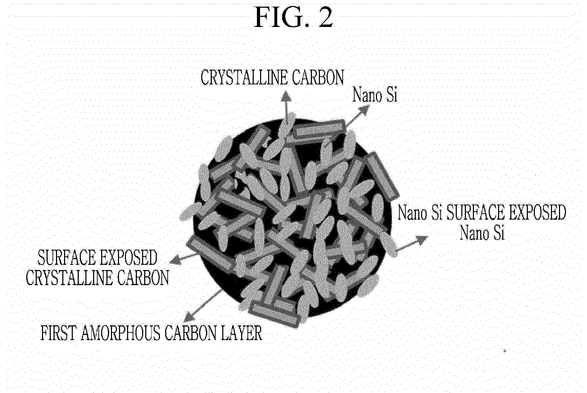

FIG. 1 schematically illustrates a structure of a negative electrode active material according to an exemplary embodiment, that is, a case where the negative electrode active material includes an amorphous carbon coating layer positioned on a surface of a silicon-carbon composite. FIG. 2 illustratively illustrates a case where an amorphous carbon coating layer positioned on a surface of a silicon-carbon composite is not formed.

Referring to FIG. 1, in the present exemplary embodiment, since the amorphous carbon coating layer is positioned on the surface of the silicon-carbon composite, the amorphous carbon coating layer uniformly wraps the surface of the negative electrode active material, such that a specific surface area of the negative electrode active material may be decreased, and accordingly, electrochemical performance of the lithium secondary battery may be improved.

On the other hand, when the amorphous carbon coating layer is not formed on the surface of the silicon-carbon composite as illustrated in FIG. 2, nano-silicon and graphite particles are exposed on the surface of the negative electrode active material, such that a specific surface area of the negative electrode active material may be decreased, which causes deterioration in performance of the lithium secondary battery.

A full width at half maximum (FWHM) of an X-ray diffraction angle (2theta) of the silicon nanoparticles using a CuKα ray on a (111) plane may be in the range of 0.45° to 0.65°.

More specifically, a full width at half maximum (FWHM) of an X-ray diffraction angle (2theta) of the silicon nanoparticles using a CuKα ray on a (111) plane may be in the range of 0.5° to 0.65° or in the range of 0.57° to 0.65°.

A Brunauer, Emmett, and Teller (BET) specific surface area of the silicon-carbon composite having the surface on which the amorphous carbon coating layer is positioned may be 5 m²/g or less.

A D90 particle size of the silicon-carbon composite having the surface on which the amorphous carbon coating layer is positioned may be 180 nm or less.

A content of the silicon nanoparticles in the silicon-carbon composite may be in the range of 45 to 60 wt% based on the silicon-carbon composite.

The carbon matrix may include crystalline carbon and first amorphous carbon.

The crystalline carbon may include at least one of artificial graphite, flaky graphite, earthy graphite, expanded graphite, and graphene.

The first amorphous carbon may include at least one of petroleum pitch, coal tar, PAA, and PVA having a softening point of 250°C or less.

The amorphous carbon coating layer may include second amorphous carbon, and the second amorphous carbon may include at least one of petroleum pitch, coal tar, PAA, and PVA having a softening point of 250°C or less.

An average thickness of the amorphous carbon coating layer may be 10 nm or less.

A method for preparing a negative electrode active material for a lithium secondary battery according to another exemplary embodiment may include: pulverizing a silicon raw material to obtain silicon nanoparticles; obtaining a silicon-crystalline carbon precursor by mixing the silicon nanoparticles and crystalline carbon with each other; binding the silicon-crystalline carbon precursor to a first amorphous carbon precursor; and carbonizing a mixture of the silicon-crystalline carbon precursor and the first amorphous carbon precursor to obtain a silicon-carbon composite, wherein a full width at half maximum (FWHM) of an X-ray diffraction angle (2theta) of the silicon raw material using a CuKα ray on a (111) plane is 0.2° or more.

The method for preparing a negative electrode active material for a lithium secondary battery may further include, after the obtaining of the silicon-carbon composite, forming an amorphous carbon coating layer on a surface of the silicon-carbon composite.

The silicon raw material may have a D1 particle size in the range of 0.1 to 0.6 µm.

The silicon raw material may have a D10 particle size in the range of 0.7 to 1.3 µm.

The silicon raw material may have a D50 particle size in the range of 2.5 to 4.5 µm.

The silicon raw material may have a D90 particle size in the range of 5.8 to 7 µm.

The silicon raw material may have a D99 particle size in the range of 7.5 to 8.5 µm.

A pulverizing time in the pulverizing of the silicon raw material may be 10 hours to 30 hours.

The pulverizing of the silicon raw material may be performed by using wet pulverizing using an organic solvent including ethanol having purity of 99.9%.

In addition, the binding of the silicon-crystalline carbon precursor to the first amorphous carbon precursor may be performed by applying a pressure of 1 ton/cm² or less.

The carbonizing of the mixture of the silicon-crystalline carbon precursor and the amorphous carbon precursor may include: obtaining a molded product by molding the mixture of the silicon-crystalline carbon precursor and the amorphous carbon precursor; carbonizing the molded product under an inert atmosphere at a temperature of 1000°C or less; and obtaining the silicon-carbon composite by pulverizing and classifying the carbonized molded body.

In the obtaining of the silicon-carbon composite by pulverizing and classifying the carbonized molded body, the silicon-carbon composite having an average particle size (D50) in the range of 10 to 15 µm may be obtained from the carbonized molded body using at least one of a JET mill and a pin mill.

A lithium secondary battery according to still another exemplary embodiment includes: a negative electrode including the negative electrode active material according to an exemplary embodiment; a positive electrode; and an electrolyte.

### [Advantageous Effects]

According to an exemplary embodiment, reversible charging and discharging is possible without cracking due to excellent structural stability, and accordingly, a negative electrode active material having long lifespan and low expansion characteristics may be provided.

In addition, crystalline carbon may be completely captured in a silicon-carbon composite, and thus, an extremely high-capacity negative electrode active material may be provided.

### [Description of the Drawings]

FIG. 1 schematically illustrates a structure of a negative electrode active material according to an exemplary embodiment.
FIG. 2 illustratively illustrates a case where an amorphous carbon coating layer positioned on a surface of a silicon-carbon composite is not formed.
FIGS. 3 and 4 are scanning electron microscope (SEM) photographs of Example 1.

### [Mode for Invention]

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

### Negative electrode active material

As described above, the silicon-based negative electrode material exhibits a low discharge capacity ratio, and it is thus difficult to apply the silicon-based negative electrode material to an actual battery.

In order to overcome such inherent physical properties of silicon, there was an attempt to improve electrochemical characteristics of a lithium secondary battery using a silicon-carbon composite in which a particle size of silicon is controlled to a nano size and the silicon is then compounded with a carbon matrix.

However, in the silicon-carbon composite including the carbon matrix, silicon nanoparticles should be perfectly captured by the carbon matrix. However, when a grain size is decreased for reversible charging and discharging, the number of silicon nanoparticles is large, such that it is difficult to capture the silicon nanoparticles by the carbon matrix. For this reason, a specific surface area is increased, such that lifespan characteristics are significantly decreased.

In order to solve such a problem, an exemplary embodiment provides a negative electrode active material for a lithium secondary battery including a silicon-carbon composite including silicon nanoparticles and a carbon matrix and having an oxidation degree of 10.5% or less.

In the negative electrode active material according to the present exemplary embodiment, the oxidation degree may be 10.5% or less, and more specifically be in the range of 6% to 10.5% or 6% to 9%.

For reversible expansion and contraction of silicon nanoparticles, the smaller the grain size of the silicon nanoparticles, the better. However, in order to decrease the grain size, a milling time of a silicon raw material is inevitably increased, and accordingly, there is a problem that an oxidation degree of the silicon-carbon composite is increased. Accordingly, it is necessary to control an appropriate grain size range and oxidation degree range by controlling a preparing process of the silicon raw material.

That is, in the present invention, a D90 particle size of the silicon nanoparticles satisfies a range to be described later, and the oxidation degree satisfies the above range. In this case, there is an advantageous effect in that the reversible expansion and contraction of the silicon nanoparticles are easy and productivity of the negative electrode active material is excellent. In addition, excellent electrochemical characteristics of a lithium secondary battery to which the negative electrode active material according to the present exemplary embodiment is applied may be secured.

A full width at half maximum (FWHM) of an X-ray diffraction angle (2theta) of the silicon nanoparticles using a CuKα ray on a (111) plane may be in the range of 0.45° to 0.65°, and more specifically in the range of 0.5° to 0.65° or 0.57° to 0.65°.

When the full width at half maximum (FWHM) of the silicon nanoparticles on the (111) plane satisfies the above range, it is advantageous in that reversible charging and discharging is possible without cracking of the silicon nanoparticles. In addition, when the silicon nanoparticles as described above are used, a high-capacity negative electrode active material for a lithium secondary battery having a capacity of a single material exceeding, for example, 1,400 mAh/g may be prepared.

The negative electrode active material according to the present exemplary embodiment further includes an amorphous carbon coating layer positioned on a surface of the silicon-carbon composite.

A Brunauer, Emmett, and Teller (BET) specific surface area of the silicon-carbon composite having the surface on which the amorphous carbon coating layer is positioned may be 5 m²/g or less, and more specifically be in the range of 3.5 m²/g to 5 m²/g or 4 m²/g to 5 m²/g. When the specific surface area of the silicon-carbon composite having the surface on which the amorphous carbon coating layer is positioned satisfies the above range, a high-capacity negative electrode active material for a lithium secondary battery may be prepared.

A D90 particle size of the silicon nanoparticles may be 180 nm or less, and more specifically be in the range of 50 nm to 180 nm, 50 nm to 150 nm, 80 nm to 150 nm, or 100 nm to 150 nm.

As the D90 particle size of the silicon nanoparticles decreases, a viscosity of a slurry including the silicon nanoparticles increases by approximately 10%. This means that the number of nanosized silicon particles in the slurry is increased. In the present exemplary embodiment, the D90 particle size of the silicon nanoparticles satisfies the above range, and thus, the viscosity of the slurry may be maintained at a constant level.

Meanwhile, a content of the silicon nanoparticles in the silicon-carbon composite may be in the range of 45 to 60 wt% based on 100 wt% of the silicon-carbon composite. As the content of the silicon nanoparticles increases, the silicon nanoparticles and crystalline carbon for imparting conductivity and reversibility may be completely captured in a high-density first amorphous carbon layer positioned in the carbon matrix, and structural stability that a structure of the silicon-carbon composite does not collapse is improved.

Meanwhile, the carbon matrix may include crystalline carbon and first amorphous carbon.

The crystalline carbon may include at least one of artificial graphite, flaky graphite, earthy graphite, expanded graphite, and graphene.

In addition, the first amorphous carbon may include at least one of petroleum pitch, coal tar, PAA, and PVA having a softening point of 250°C or less.

An average particle size (D50) of the crystalline carbon included in the carbon matrix may be in the range of 8 to 10 µm or 4 to 8 µm. When the average particle size of the crystalline carbon satisfies the above range, the crystalline carbon may improve charging and discharging reversibility of the lithium secondary battery by complementing insufficient conduction characteristics of the silicon nanoparticles.

The first amorphous carbon may improve binding strength between respective raw materials included in the silicon-carbon composite by electrically and physically connecting the silicon nanoparticles and the crystalline carbon to each other.

When contents of the silicon nanoparticles, the crystalline carbon, and the first amorphous carbon included in the silicon-carbon composite are appropriately controlled within the above range, a negative electrode active material having excellent conductivity and flammability and excellent structural stability may be prepared.

As described above, the negative electrode active material according to the present exemplary embodiment includes the amorphous carbon coating layer positioned on the surface of the silicon-carbon composite. The amorphous carbon coating layer may include second amorphous carbon, and the second amorphous carbon may include at least one of petroleum pitch, coal tar, PAA, and PVA having a softening point of 250°C or less.

An average thickness of the amorphous carbon coating layer may be 10 nm or less, and more specifically be in the range of 1 nm to 10 nm. When the average thickness of the amorphous carbon coating layer satisfies the above range, capacity characteristics of the negative electrode active material are excellent.

In the negative electrode active material for a lithium secondary battery according to the present exemplary embodiment, by controlling the oxidation degree in a specific range, a negative electrode active material for a lithium secondary battery having excellent structural stability and high capacity may be prepared.

Method for preparing negative electrode active material for lithium secondary battery

Hereinafter, a method for preparing a negative electrode active material for a lithium secondary battery according to an exemplary embodiment will be described. However, the following method for preparing a negative electrode active material for a lithium secondary battery is an example of a method for preparing a negative electrode active material for a lithium secondary battery including a silicon-carbon composite, and the present exemplary embodiment is not limited to the following method.

A method for preparing a negative electrode active material for a lithium secondary battery according to another exemplary embodiment includes: a step of pulverizing a silicon raw material to obtain silicon nanoparticles; a step of obtaining a silicon-crystalline carbon precursor by mixing the silicon nanoparticles and crystalline carbon with each other; a step of binding the silicon-crystalline carbon precursor to a first amorphous carbon precursor; and a step of carbonizing a mixture of the silicon-crystalline carbon precursor and the first amorphous carbon precursor to obtain a silicon-carbon composite.

In this case, a full width at half maximum (FWHM) of an X-ray diffraction angle (2theta) of the silicon raw material using a CuKα ray on a (111) plane may be 0.2° or more.

In addition, a detailed description of the silicon nanoparticles, the crystalline carbon, and the amorphous carbon included in the silicon-carbon composite has been provided above, and will thus be omitted.

In the present exemplary embodiment, a method for manufacturing a lithium secondary battery may further include, after the step of obtaining the silicon-carbon composite, a step of forming an amorphous carbon coating layer on a surface of the silicon-carbon composite. A detailed description of the amorphous carbon coating layer has been provided above, and will thus be omitted.

In order for the silicon-carbon composite using the silicon nanoparticles to have long lifespan and low expansion characteristics, the silicon nanoparticles should have sufficiently low grains, and the carbon matrix including the amorphous carbon should be able to capture the silicon nanoparticles and the crystalline carbon.

In the present exemplary embodiment, silicon of which a full width at half maximum (FWHM) of an X-ray diffraction angle (2theta) using a CuKα ray on a (111) plane is 0.2° or more and more specifically is in the range of 0.2° to 0.4° is used as the silicon raw material.

In addition, the silicon raw material may have a D1 particle size in the range of 0.1 to 0.6 µm and a D10 particle size in the range of 0.7 to 1.3 µm. In addition, the silicon raw material may have a D50 particle size in the range of 2.5 to 4.5 µm, a D90 particle size in the range of 5.8 to 7 µm, and a D99 particle size in the range of 7.5 to 8.5 µm.

After such a silicon raw material is prepared, the silicon raw material is pulverized in a nano size using mechanical milling, and a full width at half maximum (FWHM) of an X-ray diffraction angle (2theta) of the pulverized silicon nanoparticles using a CuKα ray on the (111) plane may be 0.45° to 0.65°, and more specifically be in the range of 0.5° to 0.65° or 0.57° to 0.65°, as described above.

A full width at half maximum (FWHM) range of the silicon nanoparticles on the (111) plane may be adjusted by increasing a milling time, increasing a ball per ratio (BPR), or adjusting a solid content ratio to increase a probability of collision with a zirconia ball in a milling process using the silicon raw material.

Specifically, in the milling process, zirconia beads were used in a size less than twice the size of D99 of an injected raw material. This is because when a grain size D99 is excessively great or the zirconia beads are small, nanonization efficiency is excessively low, such as side effects such as an increase in nanonization time and consequent oxidation of silicon may occur.

In the step of pulverizing the silicon, a wet pulverizing method using an organic solvent such as ethanol or IPA may be used to prevent oxidation of the silicon nanoparticles. Specifically, ethanol having purity of 99.9% may be used. For effective silicon nanoization, a solid content ratio may be in the range of 8 to 15%.

The BPR of a raw material to the zirconia beads was 5:1, and the rotational speed of a rotor inside a pulverizer was maintained at 2500 rpm for all Examples. In order to confirm a threshold size (Dc: 150 nm or less) of the silicon nanoparticles, a size of the pulverized particles was measured with a nano grain size measuring device available from Beckman coulter Ltd, XRD was measured, and a grain size was confirmed by a Sherrer equation using a full width at half maximum (FWHM) of a (111) peak of the XRD.

A silicon pulverizing time in the step of obtaining the silicon nanoparticles may be 10 hours or more. Specifically, the silicon pulverizing time may be 10 to 30 hours or less or 15 hours to 25 hours.

In general, a silicon nanoparticle slurry may be used in a powder state using a spray dryer. In the present invention, a precursor may be obtained by mixing the silicon nanoparticles with graphite in order to impart conductivity and reversibility. That is, a silicon-graphite precursor powder may be obtained by mixing graphite powders with the silicon nanoparticle slurry using a high speed disperser and then spraying and drying the silicon nanoparticle slurry. In this case, artificial graphite, flaky graphite, or earthy graphite may be used as the graphite. Graphite less than a D50 size of a precursor on the basis of a central grain size (D50) was used as the graphite, and specifically, D50 of the graphite may be 5 to 10 µm. In a spraying and drying step, a solvent used during milling may be volatilized.

A sprayed and dried precursor composed of silicon-crystalline carbon obtained as described above may be mixed with a first amorphous carbon precursor such as pitch (carbon source) so that a silicon-crystalline carbon precursor and a carbon support layer may be formed and perfectly bound to each other in a final product. That is, the step of binding the silicon-crystalline carbon precursor to the first amorphous carbon is performed. The step of binding the silicon-crystalline carbon precursor to the first amorphous carbon is not limited as long as it is a process capable of minimizing an independent flow of silicon-crystalline carbon precursor powders in order to increase a binding force between the silicon-crystalline carbon precursor and the first amorphous carbon, and a process through contact mediation with powders, such as mechanofusion or ball milling, may be applied.

Thereafter, a step of obtaining a molded product by molding a mixture of the silicon-crystalline carbon precursor and the first amorphous carbon by applying a specific pressure within a prescribed time range so as to minimize pores existing inside the silicon-crystalline carbon precursor and increase the binding force to increase a density may be performed. In this case, a pressing pressure may be 1 ton/cm² or less. The amorphous carbon mixed in the step of binding the silicon-crystalline carbon precursor to the first amorphous carbon during press molding may improve electrochemical characteristics of synthesized powders by filling micropores inside the silicon-crystalline carbon precursor generated in a spraying and drying process. The press molding was performed by filling a self-made mold with the powders and using a pressure press facility, and a semi-finished product obtained after a molding process is in the form of a block.

After a press molding process, the silicon-carbon composite may be obtained by carbonizing the block under an inert atmosphere at a temperature less than 1000°C, performing a dry pulverizing process such as a JET mill or a pin mill on the carbonized molded product, and then classifying the carbonized molded product.

The method for preparing a negative electrode active material for a lithium secondary battery may further include, after the step of obtaining the silicon-carbon composite by pulverizing and classifying the carbonized molded body, a step of forming an amorphous carbon coating layer of 10 nm or less from the obtained silicon-carbon composite using an amorphous carbon precursor. In this case, a grain size D50 of the obtained negative electrode active material may be 10 to 15 µm.

In this case, the amorphous carbon precursor used as the coating may be a carbon source such as petroleum pitch, coal tar, PAA, and PVA having a softening point less than 250°C. A coating process was performed using a twist blade mixer, and process variables include a time, a rotational speed, and the like, but will not be described because they are not important components to be controlled in the present invention.

Thereafter, heat treatment was performed at a temperature less than 1000°C under an inert atmosphere, and a final product was prepared through sieving.

After the negative electrode active material was obtained, XRD was measured for each condition, and a grain size was calculated by a Sherrer equation using a full width at half maximum (FWHM) of a (111) main peak.

In addition, an oxidation degree of the silicon-carbon composite was measured using LECO ONH836 Series.

Another exemplary embodiment of the present invention provides a lithium secondary battery including a negative electrode including the negative electrode active material according to an exemplary embodiment of the present invention described above, a positive electrode, and an electrolyte positioned between the negative electrode and the positive electrode.

The negative electrode may be manufactured by mixing the negative electrode active material, a binder, and optionally a conductive material with each other to prepare a composition for forming a negative electrode active material layer, and then applying the composition to a negative electrode current collector.

The negative electrode current collector may be, for example, copper foil, nickel foil, stainless steel foil, titanium foil, nickel foam, copper foam, a polymer substrate coated with a conductive metal, or a combination thereof.

The negative electrode active material is the same as that of an exemplary embodiment of the present invention described above, and a description thereof will thus be omitted.

Examples of the binder may include polyvinyl alcohol, carboxymethylcellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, polypropylene, or the like, but are not limited thereto. The binder may be mixed in an amount of 1 to 30 wt% based on the total amount of the composition for forming a negative electrode active material layer.

The conductive material is not particularly limited as long as it has conductivity without causing a chemical change in a battery, and specifically, graphite such as natural graphite and artificial graphite; carbon black such as acetylene black, Ketjen black, channel black, furnace black, lamp black, and summer black; a conductive fiber such as a carbon fiber and a metal fiber; metal powders such as carbon fluoride, aluminum, and nickel powders; conductive whiskeys such as zinc oxide and potassium titanate; a conductive metal oxide such as titanium oxide; a conductive material such as a polyphenylene derivative, or the like, may be used as the conductive material. The conductive material may be mixed in an amount of 0.1 to 30 wt% based on the total amount of the composition for forming a negative electrode active material layer.

Next, the positive electrode may be manufactured by mixing a positive electrode active material, a binder, and optionally a conductive material with each other to prepare a composition for forming a positive electrode active material layer, and then applying the composition to a positive electrode current collector. In this case, the binder and the conductive material are used in the same manner as in the case of the negative electrode.

As the positive current collector, for example, stainless steel, aluminum, nickel, titanium, fired carbon, or aluminum or stainless steel surface-treated with carbon, nickel, titanium, silver, or the like, may be used.

As the positive electrode active material, a compound (lithiated intercalation compound) capable of reversible intercalation and deintercalation of lithium may be used.

As the positive electrode active material, specifically one or more of composite oxides of metals such as cobalt, manganese, nickel, or a combination thereof and lithium, as a specific example, a compound represented by any one of the following formulas may be used. LiₐA_{1-b}R_{b}D₂ (where 0.90 ≤ a ≤ 1.8 and 0 ≤ b ≤ 0.5); LiₐE_{1-b}R_{b}O_{2-c}D_{c} (where 0.90 ≤ a ≤ 1.8, 0 ≤ b ≤ 0.5, and 0 ≤ c ≤ 0.05); LiE_{2-b}R_{b}O_{4-c}D_{c} (where 0 ≤ b ≤ 0.5 and 0 ≤ c ≤ 0.05); LiₐNi_{1-b-c}Co_{b}R_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}R_{c}O₂-_{α}Z_{α} (where 0.90 ≤ a ≤ 1.8, 0 ≤ b ≤ 0.5, 0 ≤ c ≤ 0.05, and 0 < α < 2); LiₐNi_{1-b-c}Co_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}R_{c}O_{2-α}Z_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{b}E_{c}G_{d}0₂ (where 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG_{b}O₂ (where 0.90 ≤ a ≤ 1.8 and 0.001 ≤ b ≤ 0.1); LiₐCoG_{b}O₂ (where 0.90 ≤ a ≤ 1.8 and 0.001 ≤ b ≤ 0.1); LiₐMnG_{b}O₂ (where 0.90 ≤ a ≤ 1.8 and 0.001 ≤ b ≤ 0.1); LiₐMn₂G_{b}O₄ (where 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li _{(3-f)}J₂ PO₄₃ (0 ≤ f ≤ 2); Li _{(3-f)}Fe₂ PO₄₃ (0 ≤ f ≤ 2); and LiFePO₄.

In the above formula, A is Ni, Co, Mn, or a combination thereof; R is Al, Ni, Co, Mn, Cr, Fe, Mg, Sr, V, a rare earth element, or a combination thereof; D is O, F, S, P, or combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The electrolyte includes a non-aqueous organic solvent and a lithium salt.

The non-aqueous organic solvent serves as a medium through which ions involved in an electrochemical reaction of the battery may move.

The lithium salt is a material that dissolves in the organic solvent, acts as a supply source of lithium ions in the battery to enable a basic operation of the lithium secondary battery, and serves to promote the movement of the lithium ions between the positive electrode and the negative electrode.

Depending on a type of the lithium secondary battery, a separator may exist between the positive electrode and the negative electrode. As such a separator, polyethylene, polypropylene, polyvinylidene fluoride, or a multilayer film of two or more layers thereof may be used, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

Lithium secondary batteries may be classified into lithium ion batteries, lithium ion polymer batteries, and lithium polymer batteries according to types of used separators and electrolytes, may be classified into cylindrical lithium secondary batteries, prismatic lithium secondary batteries, coin-type lithium secondary batteries, pouch-type lithium secondary batteries, and the like, according to their shapes, and may be classified into bulk-type lithium secondary batteries and thin film-type lithium secondary batteries according to their sizes. Structures and manufacturing methods of these batteries have been widely known in the art, and a detailed description thereof will thus be omitted.

Hereinafter, examples of the present invention will be described in detail. However, examples are provided by way of example, and the present invention is not limited by examples, but is defined by only the scope of claims to be described below.

### Example 1

### (1) Preparation of slurry including silicon nanoparticles

A polysilicon raw material having characteristics as shown in Table 1 was prepared, and mechanical milling was then performed using an organic solvent, and a slurry including silicon nanoparticles according to Example 1 in which D50 is 100 nm, D90 is 147 nm, and a slurry viscosity is 5530 cps was prepared.

**[Table 1]**

| Division | Polysilicon grain size (unit: µm) |
|---|---|
| D1 | 0.37 |
| D10 | 1.02 |
| D50 | 3.48 |
| D90 | 6.39 |
| D99 | 7.97 |
| Full width at half maximum (FWHM) on (111) plane | 0.2548 |

### (2) Preparation of negative electrode active material

A silicon-graphite sprayed and dried precursor having a central grain size (D50) of 15 to 20 µm was synthesized by injecting and then dispersing 50 wt% of the slurry including the silicon nanoparticles prepared in (1) and 22 wt% of graphite particles having a central grain size (D50) of 5 to 10 µm based on 100 wt% of a silicon-carbon composite into a high-speed mixer. Next, mixed powders were prepared by mixing 28 wt% of pitch powders based on 100 wt% of the silicon-carbon composite. In order to form a carbon support, the mixed powders were loaded into a mold having a predetermined size, and uniaxial press molding was then performed at a pressure of about 50 tons.

A carbon-silicon composite was prepared by performing heat treatment on a block obtained in a pressing process under an inert atmosphere at a temperature less than 1000°C in order to prevent oxidation of nano-silicon, and then pulverizing the block into a range of 10 to 15 µm based on D50 with a JET mill.

Next, a negative electrode active material in which an amorphous carbon coating layer is formed at a thickness of 4 to 5 nm was prepared by injecting the carbon-silicon composite and coal tar into a twisted blade mixer, stirring the carbon-silicon composite and the coal tar for about 30 minutes, performing heat treatment under an inert atmosphere at a temperature less than 1000°C, and then performing sieving using #635 mesh (20 µm).

In this case, 3 to 10 wt% of coal tar was added based on the carbon-silicon composite.

### Examples 2 to 6 and Comparative Examples 1 to 4

### (1) Preparation of slurry including silicon nanoparticles

A slurry including silicon nanoparticles was prepared in the same manner as in (1) of Example 1 except that D50, D90, and a slurry viscosity had values shown in Table 2.

**[Table 2]**

| Division | Mechanical milling | | |
|---|---|---|---|
| | Grain size (nm) | | Slurry viscosity (unit: cps) |
| | D50 | D90 | |
| Example 1 | 100 | 147 | 5530 |
| Example 2 | 94 | 138 | 5751 |
| Example 3 | 92 | 131 | 5974 |
| Example 4 | 125 | 197 | 4897 |
| Example 5 | 114 | 164 | 5044 |
| Example 6 | 105 | 159 | 5254 |
| Comparative Example 1 | 90 | 124 | 6015 |
| Comparative Example 2 | 928 | 1541 | 4475 |
| Comparative Example 3 | 254 | 547 | 4688 |
| Comparative Example 4 | 97 | 151 | 5560 |
| Comparative Example 5 | 3480 | 6390 | 4223 |
| Comparative Example 6 (uncoated) | 114 | 164 | 5044 |
| Comparative Example 7 (uncoated) | 105 | 159 | 5254 |
| Comparative Example 8 (uncoated) | 97 | 151 | 5560 |
| Comparative Example 9 (uncoated) | 100 | 147 | 5530 |

### (2) Preparation of negative electrode active material

Negative electrode active materials according to Examples 2 to 6 and Comparative Examples 1 to 4 were prepared in the same manner as in (2) of Example 1 except that contents of the slurry containing the silicon nanoparticles, graphite particles, and pitch powders were adjusted and used as follows.

In Examples 1 to 3, Comparative Example 1, and Comparative Example 9, 50 wt% of the slurry including the silicon nanoparticles, 18 wt% of the graphite particles, and 32 wt% of the pitch powders were used, and in Examples 4 to 6 and Comparative Examples 2 to 8, 50 wt% of the slurry including the silicon nanoparticles, 22 wt% of the graphite particles, and 28 wt% of the pitch powders were used.

However, in the case of Comparative Examples 6 to 9, negative electrode active materials in which an amorphous carbon coating layer is not formed were prepared by preparing the carbon-silicon composite in (2) of Example 1, performing heat treatment under an inert atmosphere at a temperature less than 1000°C, and then performing sieving using #635 mesh (20 µm).

### Comparative Example 5

### (1) Preparation of slurry

A polysilicon raw material was prepared, and a slurry was then prepared without performing mechanical milling.

### (2) Preparation of negative electrode active material

A negative electrode active material was prepared in the same manner as in (2) of Example 1 except that 50 wt% of the slurry prepared in (1), 20 wt% of graphite particles, and 30 wt% of pitch powders were used.

### Experimental Example 1 - SEM analysis

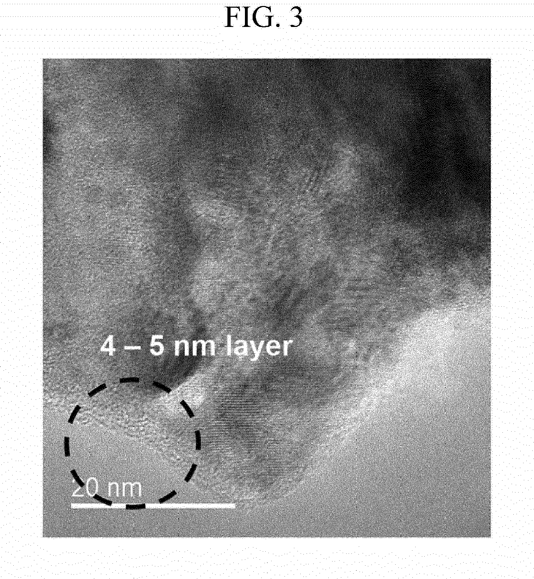

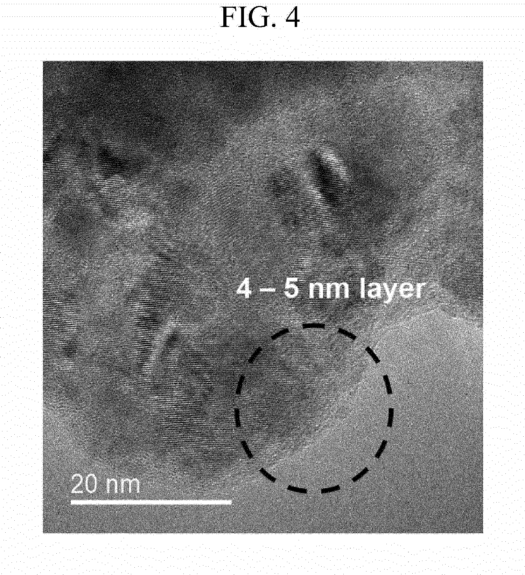

An SEM analysis was performed on the negative electrode active material prepared according to Example 1 and were illustrated in FIGS. 3 and 4.

Referring to FIGS. 3 and 4, it may be confirmed that an amorphous carbon coating layer is formed at a thickness of about 4 to 5 nm in the negative electrode active material according to Example 1.

### Experimental Example 2 - Evaluation of characteristics of negative electrode active material

For the negative electrode active materials prepared in Examples and Comparative Examples, full widths at half maximum (FWHMs) of the silicon nanoparticles on a (111) plane, and oxidation degrees and specific surface areas of the negative electrode active materials were measured.

Specifically, for the silicon nanoparticles, full widths at half maximum (FWHM 111) of diffraction peaks on the (111) plane by X-ray diffraction using a CuKα ray were measured, and the oxidation degrees were measured using LECO ONH836 Series.

The specific surface areas were measured using a BET measuring equipment (Micromeritics TriStar II 3020). The results were shown in Table 3.

**[Table 3]**

| Division | Full width (°) at half maximum (FWHM) of silicon nanoparticles | Oxidation degree (%) of negative electrode active material | Specific surface area (m²/g) of negative electrode active material |
|---|---|---|---|
| Example 1 | 0.6017 | 8.49 | 4.11 |
| Example 2 | 0.6191 | 9.11 | 4.39 |
| Example 3 | 0.6211 | 10.15 | 4.87 |
| Example 4 | 0.4571 | 6.14 | 4.22 |
| Example 5 | 0.5001 | 6.57 | 4.28 |
| Example 6 | 0.5721 | 6.84 | 4.3 |
| Comparative Example 1 | 0.6512 | 11.3 | 5.94 |
| Comparative Example 2 | 0.3252 | 5.56 | 3.67 |
| Comparative Example 3 | 0.4182 | 5.87 | 4.04 |
| Comparative Example 4 | 0.6047 | 8.41 | 7.09 |
| Comparative Example 5 | 0.2624 | 4.95 | 3.41 |
| Comparative Example 6 (uncoated) | 0.5001 | 6.61 | 8.55 |
| Comparative Example 7 (uncoated) | 0.5721 | 6.94 | 8.24 |
| Comparative Example 8 (uncoated) | 0.6047 | 8.49 | 10.55 |
| Comparative Example 9 (uncoated) | 0.6017 | 8.56 | 7.84 |

Referring to Table 3, it may be confirmed that in the case of Examples 1 to 7, oxidation degrees were 10.5% or less and full widths at half maximum (FWHMs) of the silicon nanoparticles on the (111) plane were in the range of 0.45° to 0.65°.

However, it may be confirmed that in the case of Comparative Example 1, an oxidation degree exceeded 10.5%, and in the case of Comparative Examples 2, 3, and 5, full widths at half maximum (FWHMs) of the silicon nanoparticles on the (111) surface was out of the above range.

In addition, it may be confirmed that in the case of Examples 1 to 6 in which the amorphous carbon coating layer was formed, specific surface areas were significantly reduced even though the silicon nanoparticles had a full width at half maximum (FWHM) similar to that of Comparative Example 4.

Next, it may be confirmed that in the case of Comparative Examples 6 to 7 in which the amorphous carbon coating layer was not formed, specific surface area values are high due to open pores exposed on surfaces of silicon-carbon composite particles.

### Experimental Example 3 - Electrochemical evaluation

### (1) Manufacture of coin-type half-cell

A CR2032 coin cell was manufactured using the negative electrode active material prepared as described above, and electrochemical evaluation was then performed.

Specifically, a mixture was prepared by mixing 96.1 wt% of the negative electrode active material, 1 wt% of a conductive material (super C65), 1.7 wt% of carboxymethyl cellulose (CMC), and 1.2 wt% of styrene-butadiene rubber (SBR) with each other. A negative electrode active material slurry having a capacity of about 440 mAh/g was prepared by mixing 8 wt% of the mixture with commercial natural graphite having a capacity of 360 mAh/g.

Next, the slurry was coated on a Cu current collector, dried, and then rolled to manufacture a negative electrode. A loading amount of the negative electrode was 8.0 ± 0.5 mg/cm², and an electrode density of the negative electrode was 1.55 to 1.60 g/cc.

A 2032 coin-type half-cell was manufactured by a general method by using the negative electrode, a lithium metal negative electrode (thickness of 300 µm, MTI), an electrolyte, and a polypropylene separator. As the electrolyte, a solution obtained by dissolving 1M LiPF₆ in a mixed solvent of ethylene carbonate (EC) and ethylmethyl carbonate (EMC) (mixing ratio EC: EMC = 3:7 vol%) to prepare a mixed solution and then adding 1.5 wt% of vinylene carbonate (VC) to the mixed solution was used.

### (2) Evaluation of charging and discharging characteristics

The coin-type half-cell manufactured in (1) was aged at room temperature (25°C) for 24 hours, and a charging and discharging test was then performed.

In capacity evaluation, 440 mAh/g was used as a reference capacity. The charging and discharging test was performed in an operating voltage section of 0.005 V to 1.0 V, and a current during charging and discharging was measured at 0.1 C in an initial cycle. In addition, 50 cycle lifespans were measured by applying a current of 0.5C during charging and discharging based on a first 1 C capacity. In this case, a charging cut-off current was set to 0.005C. The results were shown in Table 4.

### (3) Evaluation of expansion characteristics

Expansion characteristics (%) are obtained by a thickness increase rate of an electrode completed in a charged state after performing 50 cycles with the current of 0.5C as compared with an initial electrode thickness. The measurement was performed with a micrometer after the coin cell was dismantled after completion of the cycle and foreign substances on an electrode surface were cleaned using a DMC solvent.

**[Table 4]**

| Division | Capaci ty (mAh/g) | Efficien cy (%) | Lifesp an (%) | Expansi on (%) |
|---|---|---|---|---|
| Example 1 | 1435 | 85.7 | 85.1 | 52.1 |
| Example 2 | 1415 | 85.2 | 83.1 | 52.8 |
| Example 3 | 1408 | 85.1 | 82.1 | 53.4 |
| Example 4 | 1474 | 86.6 | 70.2 | 69.8 |
| Example 5 | 1463 | 85.9 | 71.1 | 67 |
| Example 6 | 1458 | 85.7 | 77.7 | 66.1 |
| Comparati ve Example 1 | 1357 | 81.4 | 79.4 | 58.4 |
| Comparati ve Example 2 | 1533 | 88.4 | 33.7 | 89.7 |
| Comparati ve Example 3 | 1489 | 87.3 | 47.4 | 77.4 |
| Comparati ve Example 4 | 1294 | 85 | 55.4 | 71.1 |
| Comparati ve Example 5 | 1574 | 89.5 | 28.4 | 105.1 |
| Comparati ve Example 6 (uncoated) | 1472 | 85.5 | 63.4 | 70.4 |
| Comparati ve Example 7 (uncoated) | 1467 | 85.1 | 68.5 | 69 |
| Comparati ve Example 8 (uncoated) | 1307 | 84.5 | 46.7 | 73.2 |
| Comparati ve Example 9 (uncoated) | 1445 | 85.1 | 57.4 | 70.1 |

Referring to Table 4, it may be confirmed that in Examples 1 to 7, in which the oxidation degree of the negative electrode active material is 10.5% or less, capacity characteristics and efficiency are excellent. In contrast, it may be confirmed that in Comparative Example 1 in which an oxidation degree exceeds 10.5%, a capacity is significantly decreased. Specifically, in terms of capacity and efficiency, values of Comparative Example 2 in which capturing of crystalline carbon including silicon nanoparticles is insufficient were lower than those of Comparative Example 1, and also in terms of lifespan characteristics, a lifespan of Comparative Example 1 was decreased by about 20% or more due to damage to a particle structure caused by expansion of nano-silicon.

In addition, in Examples 1 to 6 in which the full widths at half maximum (FWHMs) of the silicon nanoparticles on the (111) plane are in the range of 0.45° to 0.65°, lifespan and expansion characteristics are also excellent. On the other hand, it may be confirmed that in the case of Comparative Examples 1, 2, 3, and 5 in which the full widths at half maximum (FWHMs) of the silicon nanoparticles on the (111) plane are out of the above range, life characteristics are significantly decreased and expansion characteristics are also bad. This is thought to be due to an efficient capturing effect of the silicon nanoparticles and an increase in the full width at half maximum (FWHM) of the nano-silicon.

In addition, the specific surface areas of the negative electrode active materials of Examples 1 to 7 were significantly lower than those of Comparative Examples 1 to 5, and thus, high capacity and efficiency values were exhibited.

However, the full width at half maximum (FWHM) of the silicon nanoparticles on the (111) plane

In addition, in the case of Comparative Examples 6 to 8 in which the amorphous carbon coating layer was not formed, lifespan and expansion characteristics were significantly deteriorated due to open pores exposed on surfaces of the silicon-carbon composite particles.

The present invention is not limited to the above-described exemplary embodiments, and may be implemented in various different forms, and a person of an ordinary skill in the art to which the present invention pertains may understand that the present invention may be implemented in other specific forms without changing the technical spirit or essential features of the present invention. Therefore, it is to be understood that the exemplary embodiments described above are illustrative rather than being restrictive in all aspects.

## Claims

1. A negative electrode active material for a lithium secondary battery, comprising:
a silicon-carbon composite including silicon nanoparticles and a carbon matrix,
wherein an oxidation degree of the negative electrode active material is 10.5% or less.

2. The negative electrode active material for a lithium secondary battery of claim 1, wherein:
the oxidation degree of the negative electrode active material is in the range of 6% to 9%.

3. The negative electrode active material for a lithium secondary battery of claim 1, further comprising
an amorphous carbon coating layer positioned on a surface of the silicon-carbon composite.

4. The negative electrode active material for a lithium secondary battery of claim 1, wherein:
a full width at half maximum (FWHM) of an X-ray diffraction angle (2theta) of the silicon nanoparticles using a CuKα ray on a (111) plane is in the range of 0.45° to 0.65°.

5. The negative electrode active material for a lithium secondary battery of claim 1, wherein:
a full width at half maximum (FWHM) of an X-ray diffraction angle (2theta) of the silicon nanoparticles using a CuKα ray on a (111) plane is in the range of 0.5° to 0.65°.

6. The negative electrode active material for a lithium secondary battery of claim 1, wherein:
a full width at half maximum (FWHM) of an X-ray diffraction angle (2theta) of the silicon nanoparticles using a CuKα ray on a (111) plane is in the range of 0.57° to 0.65°.

7. The negative electrode active material for a lithium secondary battery of claim 3, wherein:
a Brunauer, Emmett, and Teller (BET) specific surface area of the silicon-carbon composite having the surface on which the amorphous carbon coating layer is positioned is 5 m²/g or less.

8. The negative electrode active material for a lithium secondary battery of claim 3, wherein:
a D90 particle size of the silicon-carbon composite having the surface on which the amorphous carbon coating layer is positioned is 180 nm or less.

9. The negative electrode active material for a lithium secondary battery of claim 1, wherein:
a content of the silicon nanoparticles in the silicon-carbon composite is in the range of 45 to 60 wt% based on the silicon-carbon composite.

10. The negative electrode active material for a lithium secondary battery of claim 1, wherein:
the carbon matrix includes crystalline carbon and first amorphous carbon.

11. The negative electrode active material for a lithium secondary battery of claim 10, wherein:
the crystalline carbon includes at least one of artificial graphite, flaky graphite, earthy graphite, expanded graphite, and graphene.

12. The negative electrode active material for a lithium secondary battery of claim 10, wherein:
the first amorphous carbon includes at least one of petroleum pitch, coal tar, PAA, and PVA having a softening point of 250°C or less.

13. The negative electrode active material for a lithium secondary battery of claim 3, wherein:
the amorphous carbon coating layer includes second amorphous carbon, and
the second amorphous carbon includes at least one of petroleum pitch, coal tar, PAA, and PVA having a softening point of 250°C or less.

14. The negative electrode active material for a lithium secondary battery of claim 3, wherein:
an average thickness of the amorphous carbon coating layer is 10 nm or less.

15. A method for preparing a negative electrode active material for a lithium secondary battery, comprising:
pulverizing a silicon raw material to obtain silicon nanoparticles;
obtaining a silicon-crystalline carbon precursor by mixing the silicon nanoparticles and crystalline carbon with each other;
binding the silicon-crystalline carbon precursor to a first amorphous carbon precursor; and
carbonizing a mixture of the silicon-crystalline carbon precursor and the first amorphous carbon precursor to obtain a silicon-carbon composite,
wherein a full width at half maximum (FWHM) of an X-ray diffraction angle (2theta) of the silicon raw material using a CuKα ray on a (111) plane is 0.2° or more.

16. The method for preparing a negative electrode active material for a lithium secondary battery of claim 15, further comprising
after the obtaining of the silicon-carbon composite, forming an amorphous carbon coating layer on a surface of the silicon-carbon composite.

17. The method for preparing a negative electrode active material for a lithium secondary battery of claim 15, wherein:
the silicon raw material has a D1 particle size in the range of 0.1 to 0.6 µm.

18. The method for preparing a negative electrode active material for a lithium secondary battery of claim 15, wherein:
the silicon raw material has a D10 particle size in the range of 0.7 to 1.3 µm.

19. The method for preparing a negative electrode active material for a lithium secondary battery of claim 15, wherein:
the silicon raw material has a D50 particle size in the range of 2.5 to 4.5 µm.

20. The method for preparing a negative electrode active material for a lithium secondary battery of claim 15, wherein:
the silicon raw material has a D90 particle size in the range of 5.8 to 7 µm.

21. The method for preparing a negative electrode active material for a lithium secondary battery of claim 15, wherein:
the silicon raw material has a D99 particle size in the range of 7.5 to 8.5 µm.

22. The method for preparing a negative electrode active material for a lithium secondary battery of claim 15, wherein:
a pulverizing time in the pulverizing of the silicon raw material is 10 hours to 30 hours.

23. The method for preparing a negative electrode active material for a lithium secondary battery of claim 15, wherein:
the pulverizing of the silicon raw material
is wet pulverizing using an organic solvent including ethanol having purity of 99.9%.

24. The method for preparing a negative electrode active material for a lithium secondary battery of claim 15, wherein:
the binding of the silicon-crystalline carbon precursor to the first amorphous carbon precursor
is performed by applying a pressure of 1 ton/cm² or less.

25. The method for preparing a negative electrode active material for a lithium secondary battery of claim 15, wherein:
the carbonizing of the mixture of the silicon-crystalline carbon precursor and the amorphous carbon precursor includes:
obtaining a molded product by molding the mixture of the silicon-crystalline carbon precursor and the amorphous carbon precursor;
carbonizing the molded product under an inert atmosphere at a temperature of 1000°C or less; and
obtaining the silicon-carbon composite by pulverizing and classifying the carbonized molded body.

26. The method for preparing a negative electrode active material for a lithium secondary battery of claim 15, wherein:
in the obtaining of the silicon-carbon composite by pulverizing and classifying the carbonized molded body,
the silicon-carbon composite having an average particle size (D50) in the range of 10 to 15 µm is obtained from the carbonized molded body using at least one of a JET mill and a pin mill.

27. A lithium secondary battery comprising:
a negative electrode including the negative electrode active material of claim 1;
a positive electrode; and
an electrolyte.
